# EUROPEAN PATENT SPECIFICATION

(11) **EP 1 673 770 B1**
(45) Date of publication and mention of the grant of the patent: **18.11.2009**
(21) Application number: 04765150.0
(22) Date of filing: 13.09.2004
(51) Int. Cl.: G11B 19/20

(54) **TURNTABLE WITH POSITIONAL SETTING**
DREHSCHEIBE MIT POSITIONSEINSTELLUNG
PLATEAU A REGLAGE DE POSITION

(30) Priority: 14.10.2003 DE 10348428
(43) Date of publication of application: 28.06.2006
(73) Proprietor: Thomson Licensing, 92100 Boulogne-Billancourt (FR)
(72) Inventor: DUPPER, Rolf, 78050 Villingen-Schwenningen (DE); TABOR, Günter, 78056 Villingen-Schwenningen (DE); BUSCHE, Oliver, 78056 Villingen-Schwenningen (DE)
(74) Representative: Thies, Stephan
(86) International application number: PCT/EP2004/010232
(87) International publication number: WO 2005/041184

(56) References cited:
- WO-A-02/089132

## Description

The present invention relates to a turntable for a drive for interchangeable storage media in disc form.

Nowadays, there are a large number of known interchangeable storage media in disc form. These are mainly optical storage media such as for example the CD (compact disc) or the DVD (digital versatile disc) in their various forms. There are, however, also known magnetic storage media in disc form (floppy disc) or optomagnetic storage media in disc form (MOD, magnetooptical disc). Drives for storage media of this type generally have a turntable, which carries the storage medium that is located in the drive on its supporting surface and fixes it spatially by a clamping holder. The turntable is set in a rotational movement with the aid of a motor for reading from and/or writing to the storage medium, and is mounted either directly on the motor shaft or else on a drive shaft of its own. In the latter case, the drive of the turntable takes place by means of a corresponding gear mechanism.

In the case of drives for storage media in disc form with a relatively low storage density, such as the CD for example, the requirements for the accuracy of the turntable are relatively low. In the case of the drives for storage media with a high storage density, which depending on the type have for example a number of storage layers, this is no longer the case. Here, the turntable has to meet high requirements in respect of freedom from radial and axial runout. Ideally, the axis of symmetry of the turntable should coincide with the axis of rotation of the motor shaft. Any inclination or offset of the axis of symmetry in relation to the axis of rotation of the motor shaft is subject to close tolerances and leads to difficulties when reading from and/or writing to the storage medium.

For reasons of cost, injection-moulded parts which are pressed onto the motor shaft are usually used for the turntable. WO-A-02/089132 discloses such a prior art arrangement. This involves a series of problems. The pressing-on diameter of the turntable and the resultant pressing-on force are difficult to maintain. If there is excessive force, the motor is damaged; if there is inadequate force, the turntable may be displaced on the motor shaft in drop tests. The pressing-on height of the turntable is also not reliable. The required tolerances for the radial and axial runout of the turntable are very difficult to maintain for the suppliers of the parts, for which reason the reject rate is relatively high. Furthermore, the rubber support of the turntable that is usually used has great thickness tolerances, which even in the case of good plastic parts cause an axial runout.

To overcome these problems, the turntable may for example be finished on a lathe, in order to achieve freedom from axial runout in this way. However, the finishing work changes the clamping force on the storage medium, since the distance from the clamping holder changes.

Another known solution envisages applying spots of adhesive to the supporting surface of the turntable. These are removed with a blade before they harden, in order to achieve freedom from axial runout in this way. This is a process which is difficult to control, since strands of adhesive may be produced in particular when the blade is lifted off.

Both solutions allow only a correction of axial runout; radial runout cannot be corrected. By contrast, this is possible if turned metal parts are used instead of injection-moulded plastic parts. However, although these can be produced with the required accuracy, they are more expensive than injection-moulded parts.

It is an object of the invention to improve the prior art.

This object is achieved according to the invention by a turntable for a drive for storage media in disc form, with a bore for receiving a motor shaft of a drive motor, in which the diameter of the bore is greater than the diameter of the motor shaft, so that there is a gap between the wall of the bore and the motor shaft, and the inclination and the position of the turntable can be set in relation to the axis of rotation of the motor shaft.

The invention uses a turntable which has an indirect fastening with respect to the motor shaft. Between the motor shaft and the turntable there is a gap for runout compensation, which is filled for example by adhesive. Instead of adhesive, other materials may also be used to fill the gap and to fix the turntable on the motor shaft, for example a heated and liquefied plastic, synthetic resins, etc. It is also conceivable for wedges to be used for fixing. The axial and radial runout accuracy and accuracy of the pressing-on height are achieved by mounting the components in a precision fixture. In this way, a favourable turntable with low precision can be used, using a varying adhesive gap to compensate for its runout.

The bore is advantageously substantially cylindrical. In this case, the diameter of the bore is greater throughout than the diameter of the motor shaft. This allows setting of both the axial and radial runout, and setting of the pressing-on height. In this configuration, it is advisable for the turntable to be adhesively bonded to the motor shaft at at least two points, to ensure adequate stability.

According to a further exemplary embodiment of the invention, the bore is substantially conical. In this case, too, setting of the radial and axial runout and of the pressing-on height is possible, provided that the diameter of the conical bore is greater throughout than the diameter of the motor shaft. In addition, this embodiment offers the advantage that the adhesive for fixing the turntable on the motor shaft is distributed better within the bore. Therefore, it is not necessary to provide further fastening points. This is advantageous in particular whenever one side of the turntable is accessible only with difficulty, such as for example in the case of turntables for the drives of portable computers. In the case of such drives, the turntable is fitted very close to the motor on account of the confined space.

According to a further embodiment of the invention, the turntable comprises two or more parts, of which only one part can be set in the inclination and/or position in relation to the axis of rotation of the motor shaft. In this case, the adhesive gap for aligning purposes is located partly between the motor shaft and the part of the turntable which can be set and partly between the parts of the turntable. Depending on the embodiment of the motor shaft, the gap may also lie exclusively between the parts of the turntable. The part which cannot be set is in this case pressed onto the motor shaft. The part which can be set is then adjusted in relation to the motor shaft and adhesively bonded to the motor shaft and/or the part which cannot be set. Alternatively, it is also possible to design the turntable in such a way that it is at least partly flexible. In this case, after fitting it onto the motor shaft, the turntable is initially formed in such a way that the radial and axial runouts lie within the desired tolerances. Subsequently, the turntable is stiffened, for example by adhesive, so that it can no longer change its form.

A method for mounting a turntable with a bore on a motor shaft comprises the steps of:
- positioning the motor shaft in a defined position with the aid of a first reference area,
- introducing the motor shaft into the bore of the turntable,
- setting the inclination and the position of the turntable in relation to the motor shaft with the aid of a second reference area, and
- fixing the motor shaft in the bore of the turntable.

For mounting, the motor together with the motor shaft is clamped in a special fixture, which serves as the reference area. This reference area is advantageously perpendicular to the motor shaft. With the aid of adjusting elements, the motor together with the motor shaft is then adjusted exactly in a defined position. It is possible to keep a check on the adjustment for example by fitting a mirror on the motor shaft and illuminating it with a collimated light beam. The position of the reflected light beam can be determined with a detector field and allows conclusions to be drawn about the alignment of the motor shaft. Once the adjustment has been made, the turntable is also mounted on the motor shaft. With the aid of a second reference area, for example a plate which has an exact mount for receiving the turntable and is parallel to the first reference area, the turntable is aligned in relation to the motor shaft. Subsequently, it is fixed on the motor shaft, for example by adhesive bonding, and removed from the adjusting fixture as a complete unit comprising the motor and the turntable. It goes without saying that it is not absolutely necessary for the motor to be adjusted first. It is similarly possible for the turntable first to be aligned in a defined manner and then the motor to be adjusted in relation to the turntable, or for both elements to be adjusted alternately.

If, as described above, the turntable comprises two or more parts, the method comprises the steps of:
- mounting the parts which cannot be set of the turntable on the motor shaft,
- positioning the motor shaft in a defined position with the aid of a first reference area,
- setting the inclination and the position of the part which can be set of the turntable in relation to the motor shaft with the aid of a second reference area, and
- fixing the part which can be set of the turntable on the motor shaft and/or the parts which cannot be set of the turntable.

Advantageously, a device for reading from and/or writing to recording media in disc form has a turntable according to the invention. Such a device has the advantage that the turntable used on the one hand achieves the required accuracy and on the other hand can be produced at low cost.

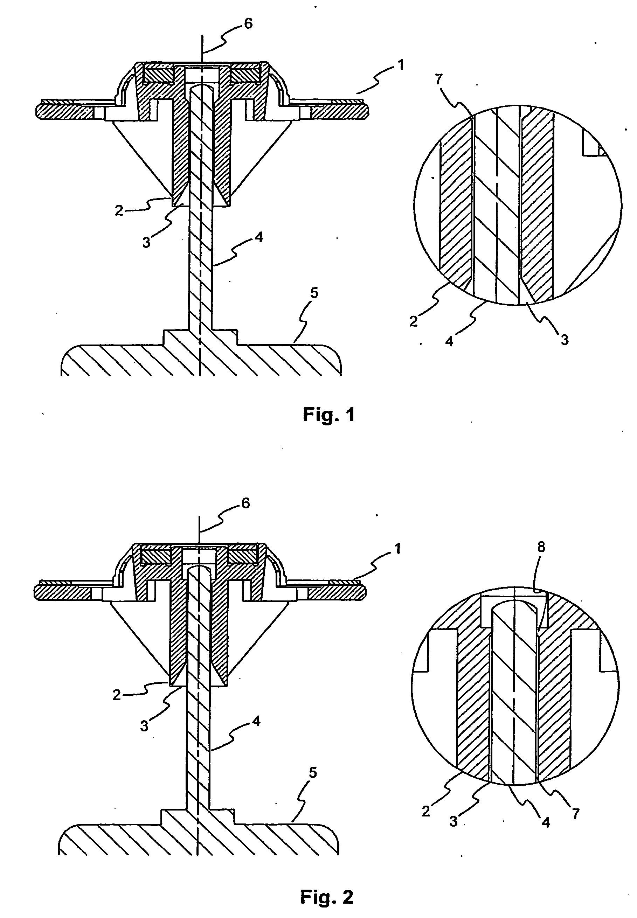

For better understanding, the invention is to be explained below on the basis of Figures 1 to 4. The same elements are designated here by the same reference numerals. It goes without saying that the invention is not restricted to the exemplary embodiments represented. Further embodiments are obvious to a person skilled in the art. In the drawing:
- Figure 1: shows a first exemplary embodiment of a turntable according to the invention with a cylindrical bore;
- Figure 2: shows an exemplary embodiment of a turntable with an annular constriction;
- Figure 3: shows a second exemplary embodiment of a turntable according to the invention with a divided turntable; and
- Figure 4: shows an exemplary embodiment of a turntable with a conical bore.

In Figure 1, a first exemplary embodiment of a turntable (1) according to the invention is represented. The turntable (1) has an elongated part (2), which is provided with a bore (3) and serves as a mount for receiving the motor shaft (4) of a drive motor (5). Ideally, the axis of symmetry of the turntable (1) coincides with the axis of rotation (6) of the motor shaft (4).

Represented in the right-hand part of Figure 1 is an enlarged detail of the bore (3) together with the motor shaft (4) located in it. The diameter of the bore (3), which in this exemplary embodiment is substantially cylindrical, is greater over the entire length than the diameter of the motor shaft (4), so that there is a gap (7) between the wall of the bore (3) and the motor shaft (4). On account of the gap (7), the turntable (1) can be both displaced and tilted in relation to the motor shaft (4). This allows the turntable (1) to be adjusted in such a way that its axis of symmetry coincides with the axis of rotation (6) of the motor shaft (4). In addition, the height of the turntable (1) on the motor shaft (4) can also be set. For fastening the turntable (1) on the motor shaft (4), the bore (3) is widened in a flared manner at the lower end and at the upper end. The flared widenings are filled with adhesive after the adjustment, so that the turntable (1) and the motor shaft (4) form a unit.

Figure 2 shows an exemplary embodiment of a turntable 1, which corresponds largely to the exemplary embodiment shown in Figure 1. However, the upper end of the bore (3) has an annular constriction (8), as revealed by the enlarged detail of the bore in the right-hand part of Figure 2. At this point, the diameter of the bore (3) coincides substantially with the diameter of the motor shaft (4). Therefore, although tilting of the turntable (1) in relation to the motor shaft (4) and setting of the height are still possible in the case of this embodiment, displacing of the turntable (1) in relation to the motor shaft (4) is no longer envisaged. The annular constriction (8) on the one hand acts as a point of rotation for the tilting of the turntable (1), on the other hand it serves as a fastening point of the turntable (1).

Therefore, only one further fastening point is necessary, determined as before by the flared widening at the lower end of the bore (3).

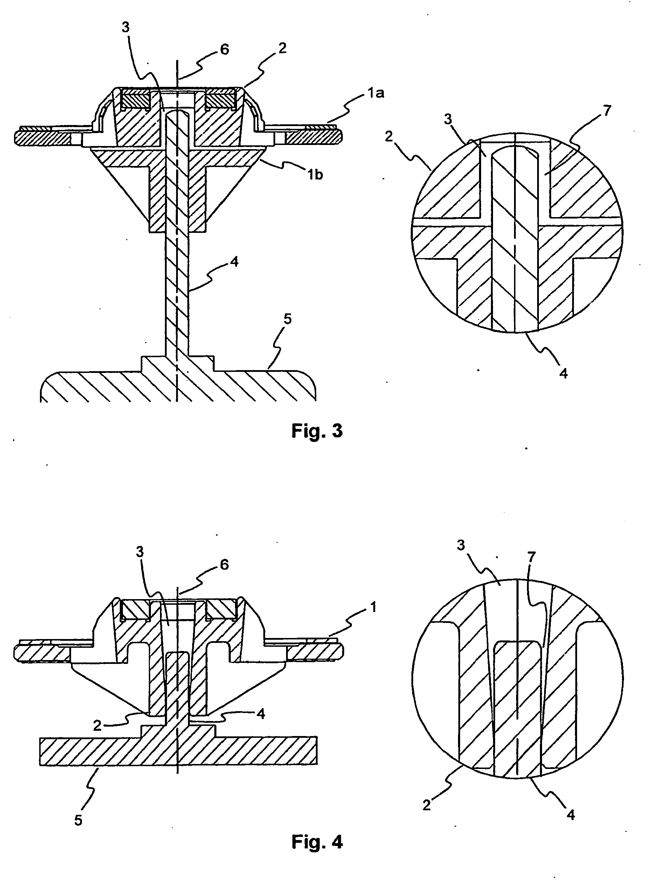

Figure 3 shows a second exemplary embodiment of the invention. In this case, the turntable (1) comprises two separate parts (1a, 1b), of which one part (1b) is fixedly mounted on the motor shaft (4), while the other part (1a) can be adjusted in relation to the motor shaft (4). The adjusting gap (7) is in this case located both between the motor shaft (4) and the bore (3) and between the two parts (1a, 1b) of the turntable (1). Since only a relatively short piece of the motor shaft (4) lies inside the bore (3), an adhesive bonding takes place here to improve the stability at least partly between the two parts (1a, 1b) of the turntable (1). It goes without saying that it is also possible for the motor shaft to reach exclusively into the fixedly mounted part (1b) of the turntable (1). In this case, the adjustable part (1a) has no bore and is adhesively bonded only to the fixedly mounted part (1b).

A further exemplary embodiment of a turntable 1 is represented in Figure 4. This embodiment is suitable in particular for drives of portable devices, in which the turntable (1) is fitted very close to the drive motor (5) on account of the confined space, so that the lower end of the bore (3) is not accessible for adhesive bonding. In this case, the bore (3) is substantially conical, achieving the effect that the adhesive is distributed over a larger region of the motor shaft (4). This is also of advantage because only a relatively small part of the motor shaft (4) lies inside the bore (3) and the increased adhesive area leads to better stability. If the diameter of the conical bore (3) is greater at its narrowest point than the diameter of the motor shaft (4), an adjustment of the inclination, the position and the height of the turntable (1) is in turn possible. If the diameter of the conical bore (3) at its narrowest point is equal to the diameter of the motor shaft (4), as is the case in Figure 4, there is no longer any need for the adjustment of the position of the turntable.

## Claims

1. Turntable for a drive for storage media in disc form, with a bore (3) for receiving a motor shaft (4) of a drive motor (5), the diameter of the bore (3) being greater than the diameter of the motor shaft (4), so that there is a gap (7) between the wall of the bore (3) and the motor shaft (4), **characterized in that** the bore is designed such that the inclination and the position of the turntable (1) can be set in relation to an axis of rotation (6) of the motor shaft (4).

2. Turntable according to Claim 1, **characterized in that** the bore (3) is substantially cylindrical.

3. Turntable according to Claim 1, **characterized in that** the bore (3) is substantially conical.

4. Turntable according to Claim 1, **characterized in that** the turntable (1) comprises two or more parts (1a, 1b), so that there is a gap (7) between the parts (1a, 1b), and the inclination and the position of at least one of the parts (1a) of the turntable (1) can be set in relation to the axis of rotation (6) of the motor shaft (4).

5. Device for reading from and/or writing to recording media in disc form, **characterized in that** it has a turntable (1) according to one of Claims 1-4.

6. Device according to claim 5, **characterized in that** the turntable (1) is bonded to the motor shaft (4) and/or the two or more parts (1a, 1b) of the turntable (1) are bonded to one another.

## Patentansprüche

1. Plattenteller für ein Laufwerk für plattenförmige Speichermedien, mit einer Bohrung (3) für die Aufnahme einer Motorwelle (4) eines Antriebsmotors (5), wobei der Durchmesser der Bohrung (3) größer ist als der Durchmesser der Motorwelle (4), so dass zwischen der Wand der Bohrung (3) und der Motorwelle (4) ein Spalt (7) vorhanden ist, **dadurch gekennzeichnet, dass** die Bohrung (3) derart gestaltet ist, dass die Neigung und die Position des Plattentellers (1) relativ zu einer Drehachse (6) der Motorwelle (4) einstellbar sind.

2. Plattenteller gemäß Anspruch 1, **dadurch gekennzeichnet, dass** die Bohrung (3) im Wesentlichen zylindrisch ist.

3. Plattenteller gemäß Anspruch 1, **dadurch gekennzeichnet, dass** die Bohrung (3) im Wesentlichen konisch ist.

4. Plattenteller gemäß Anspruch 1, **dadurch gekennzeichnet, dass** der Plattenteller (1) aus zwei oder mehr Teilen (1a, 1b) besteht, so dass zwischen den Teilen (1a, 1b) ein Spalt (7) vorhanden ist und die Neigung und die Position zumindest eines Teils (1a) des Plattentellers (1) relativ zu der Drehachse (6) der Motorwelle (4) einstellbar sind.

5. Gerät zum Lesen und/oder Beschreiben plattenförmiger Aufzeichnungsträger, **dadurch gekennzeichnet, dass** es einen Plattenteller (1) gemäß einem der Ansprüche 1-4 aufweist.

6. Gerät nach Anspruch 5, **dadurch gekennzeichnet, dass** der Plattenteller (1) mit der Motorwelle (4) verbunden ist und/oder die zwei oder mehr Teile (1a, 1b) des Plattentellers (1) miteinander verbunden sind.

## Revendications

1. Plateau d'un lecteur de supports de stockage en forme de disque, comportant un orifice (3) pour recevoir un arbre (4) de moteur d'un moteur (5) d'entraînement, le diamètre de l'orifice (3) étant supérieur au diamètre de l'arbre (4) de moteur, de sorte qu'il existe un écart (7) entre le bord de l'orifice (3) et l'arbre (4) de moteur, **caractérisé en ce que** l'orifice est conçu de façon à ce que l'inclinaison et la position du plateau (1) puissent être réglées par rapport à un axe (6) de rotation de l'arbre (4) de moteur.

2. Plateau selon la revendication 1, **caractérisé en ce que** l'orifice (3) est en grande partie cylindrique.

3. Plateau selon la revendication 1, **caractérisé en ce que** l'orifice (3) est en grande partie conique.

4. Plateau selon la revendication 1, **caractérisé en ce que** le plateau (1) comprend deux ou plusieurs parties (1a, 1b), de sorte qu'il existe un écart (7) entre les parties (1a, 1b), et l'inclinaison et la position d'au moins une des parties (1a) du plateau (1) peuvent être réglées par rapport à l'axe (6) de rotation de l'arbre (4) de moteur.

5. Dispositif de lecture et/ou d'écriture sur des supports d'enregistrement en forme de disque, **caractérisé en ce qu'**il possède un plateau (1) selon une des revendications 1 à 4.

6. Dispositif selon la revendication 5, **caractérisé en ce que** le plateau (1) est attaché au arbre (4) de moteur et/ou les deux ou plusieurs parties (1a, 1b) du plateau (1) sont attachés l'un à l'autre.
